**Europäisches Patentamt**

**European Patent Office**

**Office européen des brevets**

(19)

(11) Publication number: **0 307 050**
**A1**

(12)
# EUROPEAN PATENT APPLICATION

(21) Application number: **88201926.8**

(22) Date of filing: **07.09.88**

(51) Int. Cl.4: **C09J 3/12**

(30) Priority: **08.09.87 US 94344**

(43) Date of publication of application:
**15.03.89 Bulletin 89/11**

(84) Designated Contracting States:
**AT BE CH DE ES FR GB GR IT LI NL SE**

(71) Applicant: **THE DOW CHEMICAL COMPANY**
**2030 Dow Center Abbott Road P.O. Box 1967**
**Midland Michigan 48640-1967(US)**

(72) Inventor: **Makati, Adhok C.**
**705 Chapel Lane**
**Midland Michigan 48640(US)**
Inventor: **Kan, Charles**
**1110 Sylvan Lane**
**Midland Michigan 48640(US)**
Inventor: **Mani, Inder**
**1209 Wildwood Street**
**Midland Michigan 48640(US)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) Aqueous latex laminating adhesives which improve adherence between various substrates.

(57) The present invention relates to latexes having specific viscoelastic properties which impart improved adhesive strength between substrates such as between two plastic films or between a plastic film and paperboard. These parameters can be controlled by the glass transition temperature, molecular weight and crosslinking in the resultant latex. These latexes are suitable for use as adhesive or as components of adhesives.

EP 0 307 050 A1

# AQUEOUS LATEX LAMINATING ADHESIVES WHICH IMPROVE ADHERENCE BETWEEN VARIOUS SUBSTRATES

The present invention relates to latexes having specific viscoelastic properties useful as an adhesive or a component of an adhesive between various substrates such as between plastic films. Latexes are colloidal dispersions of polymer plastics in a continuous water phase.

Due to the difficulty in adhering most plastic film to plastic films and other substrates, solvent-based adhesives are normally used. Also known are two-component aqueous laminating adhesives which when combined have a short pot life.

An attempt to eliminate solvent emissions is creating a demand for water-based adhesives, such as latexes. Therefore, it is desirable to provide an efficient and economical method of latex application to bond plastic substrates such as plastic film to plastic films, to paperboard or to other substrates without sacrificing the strength of the bond or the pot life of the adhesive.

Accordingly, the present invention is such a latex useful as an adhesive for substrates which comprises: a latex polymer having:

(i) a storage modulus at 20°C of from $1\times10^6$ to $5\times10^6$ dynes/sq.cm ($1 \times 10^5$ to $5 \times 10^5$ pascals);

(ii) a slope of log storage modulus between 40°C and 100°C of from $-2.5\times10^{-3}$ to $-1.5\times10^{-2}$; and

(iii) a temperature at tan $\delta_{max}$ of from -45°C to 0°C.

In another embodiment, the present invention is a latex useful as a component of an adhesive for substrates which comprises: a latex polymer of a monovinyl aromatic monomer and an acyclic conjugated diene having:

(i) a storage modulus at 20°C of from $1\times10^6$ to $5\times10^6$ dynes/sq.cm ($1 \times 10^5$ to $5 \times 10^5$ pascals);

(ii) a slope of log storage modulus between 40°C and 100°C of from $-2.5\times10^{-3}$ to $-1.5\times10^{-2}$; and

(iii) a temperature at tan $\delta_{max}$ of from -45°C to 0°C.

In yet another embodiment, the present invention is a laminate structure comprising layers wherein, the first layer is a film, the second layer is an adhesive consisting essentially of a latex polymer having:

(i) a storage modulus at 20°C of from $1\times10^6$ to $5\times10^6$ dynes/sq.cm ($1 \times 10^5$ to $5 \times 10^5$ pascals);

(ii) a slope of log storage modulus between 40°C and 100°C of from $-2.5\times10^{-3}$ to $-1.5\times10^{-2}$; and

(iii) a temperature at tan $\delta_{max}$ of from -45°C to 0°C; and

the third layer is a substrate.

Surprisingly, the latex adhesives of the present invention produce a strong bond between the substrates. The bond is particularly strong between two plastic substrates, and between a plastic substrate and paperboard.

## Substrates

The term "substrate" means any solid material having a surface which can be adhered to a complimentary surface of the same or different solid material with the present latex-based adhesive composition. The term "substrate" is inclusive of any type of naturally occurring and synthetic solid materials. Representative examples of such solid materials and their forms include the following: plastic, plastic film, paper, paperboard, fabrics, wood, glass, ceramic, metal, foil, metallized plastic film, or most any other solid material in the form of a film, sheet, board or block.

The term "plastic substrates" is inclusive of all conventional plastic substrates such as, for example, polyolefin films, such as polypropylene and polyethylene, as well as polyester film or polyamide film.

Plastic substrates generally have low energy surfaces and are difficult to adhere to other substrates. Therefore, the surfaces are normally activated by flame oxidation, corona discharge, and chemical etching or primer coatings in an attempt to improve adhesion.

## Monomers

The monomers that could be employed to produce homopolymer or copolymer latexes with appropriate viscoelastic properties to be used in a laminating adhesive system include monovinyl aromatic monomer, aliphatic conjugated diene, acrylate monomer, a vinylidene halide or vinyl halide monomer, vinyl esters of carboxyl acids containing from 1 to 18 carbon atoms, such as vinyl acetate or vinyl stearate, methacrylonitrile and acrylonitrile. Optionally a monoethylenically unsaturated carboxylic acid monomer could be used. Crosslinking agents such as divinylbenzene and ethylene glycol dimethacrylate could also be used.

The term "monovinyl aromatic monomer", as used herein, is meant to include those monomers with a radical of the formula

$$CH_2 = C - \overset{\displaystyle R}{\underset{\displaystyle |}{\phantom{|}}}$$

(wherein R is hydrogen or a lower alkyl such as an alkyl having from 1 to 4 carbon atoms) attached directly to an aromatic nucleus containing from 6 to 10 carbon atoms, including those wherein the aromatic nucleus is substituted with alkyl or halogen substituents. The preferred monomers are styrene and vinyltoluene.

The term "aliphatic conjugated diene", as used herein, is meant to include compounds such as 1,3-butadiene, 2-methyl-1,3-butadiene, piperylene (1,3-pentadiene), and other hydrocarbon analogs of 1,3-butadiene.

Vinylidene halides and vinyl halides suitable for this invention include vinylidene chloride and vinyl chloride, which are highly preferred. Vinylidene bromides and vinyl bromide can also be employed.

The term "acrylate", as used herein, is meant to include the acrylate or methacrylate monomers. Additionally, the acrylates can include acids, esters, amides, and substituted derivatives thereof. Generally, the preferred acrylates are $C_1$-$C_8$ alkyl acrylates or methacrylates. Examples of such acrylates include butyl acrylate, hexyl acrylate, tertiary butyl acrylate, methylmethacrylate, butylmethacrylate, hexylmethacrylate, isobutylmethacrylate, and isopropylmethacrylate. The preferred acrylates are butyl acrylate and methylmethacrylate.

The term "monoethylenically unsaturated carboxylic acid monomer", as used herein, is meant to include those monocarboxylic monomers such as acrylic acid, and methacrylic acid; dicarboxylic monomers such as itaconic acid, fumaric acid, maleic acid, and their monoesters.

The chain transfer agent that could be employed to produce latexes with appropriate viscoelastic properties useful as laminating adhesive includes bromoform, carbon tetrachloride, alkyl mercaptans or other suitable known chain transfer agents for a given monomer composition. Of these, alkyl mercaptans are most preferred. Examples of some mercaptans are n-octyl, n-dodecyl, t-octyl, t-dodecyl mercaptan and mixtures thereof.

The latexes of the present invention can be prepared by conventional emulsion polymerization.

The latex is normally present in an amount of from at least 70 to 99 percent by weight of the total latex adhesive.

## Adhesion

The bond strength of a laminate depends on the adhesive strength and cohesive strength of the laminating adhesive system. The adhesive peel force for plastic film to plastic film is measured by a T-Peel test (ASTM D-1876-72) on an Instron. Plastic film to paperboard peel adhesion is measured by pulling the film from the paperboard on an Instron at a 180° peel. The Instron measures the force required to debond two substrates from one another which have been adhered together. The failure of the bond can occur as a cohesive failure, where the adhesive splits but adhesive remains bonded to each of the substrates. The failure of the bond can occur as adhesive failure, where the adhesive is debonded from one of either of the substrates. The failure of the bond can occur as film tear if one of the substrates is a film, where the adhesive remains bonded to itself and to the substrates but the film tears. The failure of the bond can occur as fiber tear, if one of the substrates is paper or paperboard, where the adhesive remains bonded to itself and to the substrates but tears the paper or paperboard. The failure will occur at the weakest point in the laminated structure. Cohesive failure is not desired.

One vital parameter in optimizing the peel strength is through the viscoelastic properties of the latex.

The critical viscoelastic properties of the latex are the storage and loss moduli at the temperature region between tan $\delta_{max}$ and the rubbery plateau region. These parameters can be controlled by the glass transition temperature, molecular weight and crosslinking in the resultant latex. If the moduli are too low, the peel strength is low and the failure is cohesive. If the moduli are too high, the peel strength is also low and the failure is adhesive. The optimum peel strength of the adhesive, therefore, is achieved with an optimum moduli of the latex polymer.

Viscoelastic Properties of Latexes:

The viscoelastic properties of the latexes are characterized by dynamic mechanical spectroscopy (DMS) using a procedure as described below:

The films of latexes are prepared by casting on Teflon plate. Dynamic mechanical measurements are made using a torsional frequency of 1 radian/second with 8 mm parallel plates on a Rheometric Mechanical Spectrometer. Nitrogen is used to purge the sample at all temperatures to help prevent degradation of the samples.

The glass-transition temperature of these latexes is determined at the point where tan $\delta$ is maximum

$$i.e., \quad \tan \delta = \frac{loss\ modulus}{storage\ modulus} \quad \frac{(G'')}{(G')}$$

The viscoelastic properties of these latexes have been characterized by (1) determining the storage modulus (G') at 20°C and (2) determining the slope of log storage modulus between temperatures of 40°C and 100°C as follows:

$$\text{Slope of Log Storage modulus} = \frac{Log\ G'_{T_1} - Log\ G'_{T_2}}{T_1 - T_2}$$

where $T_1 = 40°C$; $T_2 = 100°C$ and $G'_{T_1}$ is storage modulus at temperature $T_1$ and $G'_{T_2}$ is storage modulus at temperature $T_2$.

The ranges of viscoelastic properties for providing good laminating adhesive system properties can be defined as follows:

(1) Storage modulus (G') at 20°C is from $1 \times 10^6$ to $5 \times 10^6$ dynes/sq. cm. ($1 \times 10^5$ to $5 \times 10^5$ pascals) and is preferably from $1 \times 10^6$ to $3 \times 10^6$ dynes/sq cm.

(2) Slope of log storage modulus between temperature 40°C and 100°C is from $-2.5 \times 10^{-3}$ to $-1.5 \times 10^{-2}$ and preferably is from $-8.0 \times 10^{-3}$ to $-1.5 \times 10^{-2}$.

(3) The temperature at tan $\delta_{max}$ is from -45°C to 0°C and is preferably from -30°C to -10°C.

Although the latex adhesives of the present invention can be totally latex-based systems and do not require conventional tackifiers, such conventional tackifiers and other conventional additives can be added to the latex/additive blend to formulate a latex adhesive. Such tackifiers include natural resin esters and synthetic tackifiers.

These tackifiers are normally added in an amount of up to 70 weight percent of the adhesive.

The film to film laminates are prepared by applying the latex adhesive to the film by drawing it down using a Meyer rod. This coated film is dried in a forced air oven. The secondary film substrate is then applied over the adhesive coated web. A sheet of paper is placed over the laminate to protect it and an iron set at low heat is run across the paper with mild hand pressure applied.

The film to paperboard laminates are prepared by applying the latex adhesive to the film by drawing it down using a Meyer rod. This coated film is air dried for two to three minutes at room temperature, then the above coated film in semi-wet condition is gently placed on the kraft board and laminated with the use of hand pressure roller.

The following examples are intended to illustrate the invention but not to limit the scope thereof. All parts and percentages are by weight unless otherwise indicated.

## Example 1

To a one-gallon (3.79 liters) stainless reactor having an agitator and several inlets was added initial reactor mix comprising of 52.045 parts of water, 0.01 part of chelant, and a sufficient amount of seed latex to achieve a final particle size of 1050 Å (105 nm). The reactor was purged with nitrogen, agitated at 350 RPM and heated to 90°C. The monomer mix containing 33 parts styrene, 65 parts butadiene, and 2 parts t-dodecyl mercaptan was added to the reactor, beginning at time = 0 minute for a total of 240 minutes.

The aqueous mix I containing 14.7 parts water, 0.7 parts sodium persulfate, and 0.5 parts sodium salt of dodecyl sulfonated phenyl ether was added to the reactor beginning at time = 0 minutes for a total of 240 minutes. The aqueous mix II containing 20.0 parts water, 0.14 parts sodium hydroxide and 2 parts itaconic acid was added to the reactor beginning at time = 0 minutes for a total of 180 minutes. Following the additions of all charges (i.e. at time = 240 minutes), the mixture was continued to be agitated at 90°C under nitrogen for 1 hour. The latex was then steam-distilled to remove unreacted monomers and neutralized with NH₄OH to a pH of 8-9.

## Example 2-4

In a manner of Example 1, the latexes were prepared by varying the ratio of styrene to butadiene, and the level of t-dodecyl mercaptan and carbon tetrachloride while all other parameters and polymerization process conditions of Example 1 were essentially kept constant. The compositions of these latexes are indicated in Table I. The latexes were tested by the following test methods.

## Adhesion Test for Film-to-Film Laminates

The latexes prepared by systematically varying the ratio of styrene to butadiene and level of t-dodecyl mercaptan and carbon tetrachloride were evaluated for film-to-film lamination application as follows: The latexes of various compositions were formulated with 2.5 percent based on latex solids of a diol as a wetting agent. All the formulations were adjusted to 40 percent solids using water. The above laminating adhesive formulations were applied to the corona treated side of Mobil's Bicor 278T polypropylene film by drawing it down using a #3 Meyer rod, which was equivalent to a coat weight of approximately 1.5 to 2.0 lbs/ream (680 to 907 g/ream) ((3,000 sq. ft. (300 m²)).

This coated film was dried in a forced air oven set at 150°F (65°C) for three minutes, then the secondary film substrate (i.e., corona-treated side of Mobil's Bicor 278T film) was applied over the adhesive-coated web. A sheet of paper was placed over the laminate to protect it and an iron set at low heat ((surface temperature approximately 150°F (65°C)) was run across the paper with mild hand pressure applied. This was to simulate the heated nip roll. The above prepared laminates were tested utilizing T-peel (ASTM D1876-2) after conditioning the laminate at constant temperature of around 22°C and constant relative humidity of 50 percent for 24 hours. The ends of the two webs (1 inch (25.4 mm) width) comprising the laminate were secured in the opposing jaws of an Instron and pulled apart at the rate of 12 inches (305 mm) per minute.

The resulting force was reported in grams (force) per inch (N/m) along with the mode of failure, which can be adhesive failure (AF); cohesive failure (CF); adhesive/cohesive mixture failure (AF/CF), film tear or fiber tear (FT).

## Adhesion Test for An Adhesive System For Film-to-Paper Laminates

The latexes prepared by systematically varying the ratio of styrene to butadiene and level of t-dodecyl mercaptan and carbon tetrachloride were evaluated for their utility as an adhesive system to laminate film-to-paperboard. The latexes of various compositions were formulated with 4.0 percent diol as a wetting agent and titanium dioxide (TiO₂) dispersion such that the ratio of latex to TiO₂ on solids basis was 40/60. The percent solid of the above laminating adhesive system was adjusted to 58 percent. The adhesives were applied to corona-treated Hercules B523 polypropylene film by drawing it down using #20 Meyer rod. This coated film was air-dried for two to three minutes at room temperature, then the above coated film in semi-wet condition was gently placed on the unbleached Alabama Kraft board (20 point stock) and laminated with the use of hand pressure roller. The above laminates were allowed to be air-dried for 24 hours at room temperature. Then one-inch (25.4 mm) wide cuts were made through the film and part way through the paperboard. The films were pulled on an Instron at 180° at 12 inch/minute (305 mm/minute) at room temperature (i.e., 22°C). The force was recorded in grams/inch (N/m) along with mode of failure which can be adhesive failure (AF), cohesive failure (CF), fiber tear (FT) or slip stick (SS).

Film/Film Lamination Adhesive System

The results for five latexes Examples 1-4 and a comparative latex are presented in Table I. It can be seen from the data that the latexes with appropriate viscoelastic properties prepared by systematically varying monomer composition and level of chain transfer agent gave high T-peel strength for film-to-film. laminates. The comparative latex, though it gave high T-peel strength, had an undesirable cohesive failure.

EP 0 307 050 A1

## TABLE I

| Sample | Polymer | Composition | t-DDM (pph) | CCl$_4$ (pph) | T-Peel Adhesion gm/inch (N/m) | Temp. (°C) at tan $\delta_{max}$ | Storage Modulus G' at 20°C Dyne/sq cm (pascals) | $\dfrac{\log G'_{T_1} - \log G'_{T_2}}{T_1 - T_2}$ |
|---|---|---|---|---|---|---|---|---|
| 1 | S/B/IA | 33/65/2 | 2.0 | 0 | 70 (27)AF | -37 | 4.7 x 10$^6$ (4.7 x 10$^5$) | -2.5 x 10$^{-3}$ |
| 2 | S/B/IA | 33/65/2 | 4.0 | 0 | 135 (52)AF | -37 | 1.5 x 10$^6$ (1.5 x 10$^5$) | -8.5 x 10$^{-3}$ |
| 3 | S/B/IA | 48/50/2 | 1.25 | 3 | 80 (31)AF | -11 | 2.1 x 10$^6$ (2.1 x 10$^5$) | -4.9 x 10$^{-3}$ |
| 4 | S/B/IA | 48/50/2 | 2.0 | 3 | 190 (73)AF | -11 | 1.9 x 10$^6$ (1.9 x 10$^5$) | -9.4 x 10$^{-3}$ |
| Comparative | S/B/IA | 58/40/2 | 3.0 | 3 | 140 (54)CF | +2 | 1.6 x 10$^6$ (1.6 x 10$^5$) | -1.4 x 10$^{-2}$ |

Film/Paperboard Laminating Adhesive System

Selected latexes were formulated as laminating adhesives and were evaluated as described in the adhesive test for film-to-paper laminates described hereinabove. The results of this evaluation are presented in Table II.

Table II

| Latex of Example | 180° Peel Adhesion gm/inch (N/m) |
|---|---|
| 3 | 59 (23) AF |
| 4 | 355 (137) FT |
| Comparative | 41 (16) AF/SS |

It can be seen from the data listed in Table II, that the latex of Example 4 gave high peel strength. These results indicate that latexes of appropriate viscoelastic properties obtained by selecting the appropriate monomer compositions and amount of chain transfer agent, impart improved properties to the laminating adhesives.

**Claims**

1. A latex useful as an adhesive or a component of an adhesive for substrates which comprises:
a latex polymer having:
   (i) a storage modulus at 20°C of from $1 \times 10^6$ to $5 \times 10^6$ dynes/sq.cm ($1 \times 10^5$ to $5 \times 10^5$ pascals);
   (ii) a slope of log storage modulus between 40°C and 100°C of from $-2.5 \times 10^{-3}$ to $-1.5 \times 10^{-2}$; and
   (iii) a temperature at tan $\delta_{max}$ of from -45°C to 0°C.

2. A latex useful as an adhesive or a component of an adhesive for substrates which comprises: a latex polymer of a monovinyl aromatic monomer and an acyclic conjugated diene having:
   (i) a storage modulus at 20°C of from $1 \times 10^6$ to $5 \times 10^6$ dynes/sq.cm ($1 \times 10^5$ to $5 \times 10^5$ pascals);
   (ii) a slope of log storage modulus between 40°C and 100°C of from $-2.5 \times 10^{-3}$ to $-1.5 \times 10^{-2}$; and
   (iii) a temperature at tan $\delta_{max}$ of from -45°C to 0°C.

3. A latex as claimed in Claim 1 useful as an adhesive or as a component of adhesive wherein the latex is present in an amount of from about 70 to 99 weight percent of the total latex·adhesive.

4. A latex as claimed in Claim 1 wherein
   (1) the storage modulus (G') at 20°C is from $1 \times 10^6$ to $3 \times 10^6$ dynes/sq cm. ($1 \times 10^5$ to $3 \times 10^5$ pascals);
   (2) a slope of log storage modulus from 40°C to 100°C is from $-8.0 \times 10^{-3}$ to $-1.5 \times 10^{-2}$; and
   (3) the glass transition temperature is from -30°C to -10°C.

5. A latex as claimed in Claim 1 wherein the latex is prepared from monomers selected from the group consisting of: monovinyl aromatic monomer; aliphatic conjugated diene; acrylate monomer; a vinylidene halide or vinyl halide monomer; vinyl esters of carboxyl acids containing from 1 to 18 carbon atoms; methacrylonitrile; acrylonitrile; and monoethylenically unsaturated carboxylic acid monomers.

6. A laminate structure comprising layers wherein, the first layer is a film, the second layer is an adhesive consisting essentially of a latex polymer having:
(i) a storage modulus at 20°C of from $1 \times 10^6$ to $5 \times 10^6$ dynes/sq.cm ($1 \times 10^5$ to $5 \times 10^5$ pascals);
(ii) a slope of log storage modulus between 40°C and 100°C of from $-2.5 \times 10^{-3}$ to $-1.5 \times 10^{-2}$; and
(iii) a temperature at tan $\delta_{max}$ of from -45°C to 0°C; and
the third layer is a substrate selected from the group consisting of plastic film, paperboard, wood, glass and metal.

7. A laminate structure as claimed in Claim 6 wherein latex is present in an amount of from 70 to 99 weight percent of the total latex adhesive.

8. A process for preparing a latex useful as an adhesive or a component of an adhesive for substrates which comprises:

(1) preparing latexes by polymerizing a mixture of monomers comprising a monovnyl aromatic monomer, an aliphatic conjugated diene, a monoethylenically unsaturated carboxylic acid monomer and a chain transfer agent;

(2) determining the temperature at which the tan $\delta$ of each latex is maximum,

$$\text{where tan } \delta = \frac{\text{loss modulus}}{\text{storage modulus}} \quad \frac{(G'')}{(G')}$$

(3) determining the viscoelastic properties of each latex by (a) determining the storage modulus ($G'$) at $20\,^{\circ}C$ and (b) determining the slope of log storage modulus between temperatures of $40\,^{\circ}C$ and $100\,^{\circ}C$ as follows:

$$\text{Slope of Log Storage modulus} = \frac{\text{Log } G'_{T_1} - \text{Log } G'_{T_2}}{T_1 - T_2}$$

where $T_1 = 40\,^{\circ}C$; $T_2 = 100\,^{\circ}C$ and $G'_{T_1}$ is storage modulus at temperature $T_1$ and $G'_{T_2}$ is storage modulus at temperature $T_2$; and

(4) selecting those latexes having
(i) a storage modulus at $20\,^{\circ}C$ of from $1 \times 10^6$ to $5 \times 10^6$ dynes/sq.cm ($1 \times 10^5$ to $5 \times 10^5$ pascals);
(ii) a slope of log storage modulus between $40\,^{\circ}C$ and $100\,^{\circ}C$ of from $-2.5 \times 10^{-3}$ to $-1.5 \times 10^2$; and
(iii) a temperature at tan $\delta_{max}$ of from $-45\,^{\circ}C$ to $0\,^{\circ}C$.

9. A process for making a laminate structure of a first layer of a plastic film, a second layer of an adhesive consisting essentially of a latex polymer having:
(i) a storage modulus at $20\,^{\circ}C$ of from $1 \times 10^6$ to $5 \times 10^6$ dynes/sq. cm ($1 \times 10^5$ to $5 \times 10^5$ pascals);
(ii) a slope of log storage modulus between $40\,^{\circ}C$ and $100\,^{\circ}C$ of from $-2.5 \times 10^{-3}$ to $-1.5 \times 10^{-2}$; and
(iii) a temperature at tan $\delta_{max}$ of from $-45\,^{\circ}C$ to $0\,^{\circ}C$; and a third layer selected from the group consisting of plastic film, paper board, wood, glass and metal,
the process which comprises applying the layer of adhesive to the first layer of plastic film, drying the adhesive coated film and then applying the third layer over the adhesive layer coated on the first layer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 594 138  (METALLGESELLSCHAFT AG)<br>* Claim 1 * | 1-9 | C 09 J    3/12 |
| X | DE-A-2 705 378  (FUJI PHOTO FILM CO.)<br>* Claim 1;  page 4, lines 28-31 * | 1-9 | |
| X | US-A-3 341 392  (J.H. POTTER)<br>* Claim 1 * | 1-9 | |
| X | US-A-3 974 112  (D. NADLER)<br>* Claim 1 * | 1-9 | |
| X | K.O. CALVERT: "Polymer latices and their applications", pages 119-143, 1982, Applied Science Publishers Ltd, London, GB<br>* Whole article * | 1-9 | |

TECHNICAL FIELDS
SEARCHED (Int. Cl.4)

C 09 J

The present search report has been drawn up for all claims

| Place of search | Date of completion of the search | Examiner |
|---|---|---|
| THE HAGUE | 05-12-1988 | VAN HUMBEECK F.W.C. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P0401)